# EUROPEAN PATENT SPECIFICATION

(11) **EP 2 515 637 B1**
(45) Date of publication and mention of the grant of the patent: **27.11.2013**
(21) Application number: 10801250.1
(22) Date of filing: 20.12.2010
(51) Int. Cl.: A01K 91/04, A01K 91/047

(54) **FISHING TACKLE ATTACHMENT APPARATUS AND METHOD**
BEFESTIGUNGSVORRICHTUNG UND VERFAHREN FÜR ANGELZEUG
APPAREIL ET PROCÉDÉ DE FIXATION D'ENGIN DE PÊCHE

(30) Priority: 21.12.2009 GB 0922232; 22.06.2010 GB 201010470
(43) Date of publication of application: 31.10.2012
(73) Proprietor: Salamander Precision Technology Limited, Alnwick, Northumberland NE66 2GD (GB)
(72) Inventor: PETHERICK, Andrew, Northumberland NE66 1AE (GB)
(74) Representative: Sewell, Adrian David
(86) International application number: PCT/GB2010/052147
(87) International publication number: WO 2011/077124

(56) References cited:
- US-A- 1 156 152
- US-A- 2 572 721
- US-A1- 2003 182 844
- US-A1- 2007 227 059
- US-A1- 2009 199 344

## Description

The present invention relates to fishing tackle and in particular to a fishing tackle attachment apparatus. The apparatus attaches an item of fishing tackle to fishing line.

Since man started fishing he has had to consider how to attach a fishing hook to fishing line. Whilst many different methods have been employed, the most commonly used is to provide the fishing hook with an eye through which the line is passed. A knot is then tied in the line to secure the hook to the line. Other methods include simply whipping the line onto the shank of the hook. The shank of the hook may include a splayed end or not. Attaching the hook to the line using these latter techniques requires considerable skill, experience and knowledge otherwise the hook is likely to be pulled off the line.

The use of knots to attach a hook to line presents a number of challenges. First, the act of tying a knot in line often weakens the line. Hence, a fisherman may think that he is using the appropriate strength of line for the type of fishing he is undertaking, but if tying a knot in the line reduces the line's strength by 50% (which is not unusual in a poorly tied knot) his line may be too weak. If the fisherman has tied a number of knots in his line, for example to either end of a swivel, his rig may contain a number of weak points. Second, from the perspective of catching fish, it is desirable that the line should be as unobtrusive as possible, i.e. as thin as possible. However, in order to be able to tie a knot effectively in a length of fishing line, it is necessary for the line to have a certain thickness.

Also, the fact that fishing line is expected to be knotted, places a compromise on the manufacture of the line in that the fishing line is subjected to a drawing process which increases its strength, but there is a point beyond which further drawing, while continuing to increase the linear strength of the line, reduces the knot strength of that line.

A number of suggestions have been put forward regarding how knots may be dispensed with. These typically involve a collar through which the line is passed, the line then being passed through the eye of the hook or swivel and back through the collar, which is then compressed on to the line, thereby holding the item of fishing tackle in place.

This type of apparatus is exemplified in the published patent documents referred to below:

US1156152 describes a fishing hook having a corrugated shank with a flattened end. An aluminium tube is fastened to the shank as a clamp. A line is fastened by the clamp, the line having a knot at one end to prevent it from being pulled out of the clamp.

US2003/0182844 seeks to overcome the problem of having to thread a line and knot it and describes a fishing hook having a locking tube and locking arm. Line is wrapped around the shank under the locking arm and the locking tube is slid over the arm to press it down holding the line in position.

US2007/0227059 describes a crimpable collar comprising a metal outer part and an inner part made of compressible material. In use line is passed through the collar, through the eye of an item of fishing tackle, such as a hook or swivel, and back through the collar, whereupon the collar is crimped, the action of crimping exerting such a force on the compressible material that the friction force generated between the compressible material is sufficient to hold the item of tackle on the line.

However, none of the apparatus described above get over the other well known problem that affects fishing hooks, swivels and the like. Many fishermen find it very difficult to thread fishing line through the eye of the hook, swivel or the like. This operation requires a high degree of accuracy which is made particularly difficult for a fisherman with poor eyesight and when fishing offshore and the fishing vessel is listing in a swell, for example. Considering a hook, the hook must be held in the fingers of one hand whilst the line is held in the fingers of the other hand. When the weather is cold, the threading of line through the eye of a hook can be very difficult. The fisherman is likely to be wearing gloves and therefore must either hold the hook and line in gloved hands, or remove his gloves in which case his fingers may quickly become so cold that he is not able to manipulate the hook and line as is required. Furthermore, considerable knowledge of knot tying is also required to successfully secure a line to a hook or other item of fishing tackle.

It would therefore be desirable to provide an alternative means of attaching fishing line to an item of fishing tackle.

It would also be desirable to provide a fishing hook including such alternative means of attaching fishing line thereto.

It would also be desirable to provide a swivel including such alternative means of attaching fishing line thereto.

It would also be desirable to provide a connector for connecting together two pieces of fishing line of the same or different diameters.

According to the first aspect of the present invention, there is provided an item of fishing tackle comprising the features of claim 1.

The item of fishing tackle comprises a compressible connector adapted to attach said item of fishing tackle to a fishing line, wherein the compressible connector comprises a wall defining an elongate cavity having an opening at one end thereof, the cavity being adapted to receive a portion of fishing line through the opening, and wherein the wall is adapted to be compressed inelastically towards the portion of fishing line inserted into the cavity to secure the said portion of line therein,.

It will be understood that an item of fishing tackle may comprise a hook, a swivel, a line connector, or similar item used for fishing which is attachable to fishing line to form a rig.

'Fishing line' when referred to herein shall be taken to include any one or more of, or chemical composition of, mono- and/or multi-filament or derivatives thereof, braid, wire and fluorocarbon. Whilst this list could be exhaustive, the term 'fishing line' has been chosen to denote the connective material between the angler and the fish.

Preferably the connector is compressed a predetermined distance towards the portion of fishing line. Further preferably the connector is compressed a predetermined amount to engage the fishing line and to compress the fishing line a predetermined amount without compromising its integrity. Importantly, although the cross section of the portion of fishing line secured in the connector may change during compression, its cross sectional area remains unchanged. This ensures the tensile strength of the line is not compromised and remains constant whereas the frictional force between the line and the connector wall increases with increased compression of the connector and line.

Preferably the elongate cavity has an opening at each end thereof. This allows an end portion of fishing line to pass through the connector and extend a desired distance from the connector. Therefore, the connector may be attached to an end portion of fishing line or the end portion of line may extend a desired distance from the connector. This also desirably allows multiple connectors to be attached to a single piece of line making them ideal for rig manufacture and multi-link terminal tackle set ups, which is particularly desirable to lure anglers as the small solid eye is suitable for attaching lures that feature split rings. Having an opening at each end of the cavity also allows for the line to be passed across the back of a hook shank, where the item of fishing tackle is or includes a hook, so that a 'hair' can be made. Furthermore, more than one hook may connect to a single connector.

Alternatively, one end of the cavity may be closed allowing for an end portion of line to be inserted into the open end of the cavity. This provides for axial alignment of the line with the item of fishing tackle and also allows the size of the item of fishing tackle to be kept to a minimum. The item can be kept slender in shape which desirably reduces the risk of snagging on weed for example. The need to pass an end portion of line through the cavity of the connector, through a hook eye for example, and back into the cavity to crimp two portions of the line together, as is the case with known devices, is avoided which otherwise can undesirably result in adverse frictional affects and misalignment between the line portions.

Preferably the compressible connector is substantially tubular. When referring to tubular, this shall be taken to include tubes formed such that the cross-section is continuous and/or discontinuous and having any shape of cross section, such as circular, in an uncompressed state. For example, a tube in which the wall has a discontinuous cross-section the ends of the wall of the tube may meet, almost meet or overlap. Preferably the connector is circular in cross section. This ensures the connector is slender in shape to minimise the risk of weed or line, or similar, snagging thereon and to ensure the item of fishing tackle performs well through water and air without causing unnecessary turbulence. Preferably the cavity has an inner diameter which is sized according to the diameter of the line being inserted therein. Further preferably the cavity diameter is only slightly larger than the line diameter to allow for ease of insertion but minimum movement therebetween before compression of the wall.

Suitably at least the inner surface of the cavity wall may be substantially smooth to the eye, i.e. scoring or similar is not essential to sufficiently grip the line when in a compressed configuration, particularly as such scoring or similar may undesirably subject the line to point forces and compromise its integrity.

Suitably the wall of the compressible connector is formed of a metal. Preferably the wall of the connector is steel and more preferably the wall of the connector is stainless steel. Suitably the steel is tempered or annealed to ensure it is soft and uniform enough to be inelastically compressed consistently to secure the line in the connector.

Suitably the item of fishing tackle may further comprise a force distribution element adapted to distribute lateral forces exerted on the line by the connector in the region of the opening. The element protects the line from the connector wall and particularly in the region of the opening which could be sharp and compromise the integrity of the line, particularly when subjected to non-axial tensile loading.

Suitably the force distribution element may comprise a radius on or at the edge of the wall presented at the opening. Although not essential to the aligned security of the line in the connector, the force distribution element may comprise a bush of an elastically compressible material, such as soft thermoplastics, rubbers or metals, for example. The bush may comprise an end portion which extends fully or partially over the edge of the wall presented at an opening of the cavity thereby to protect the line therefrom. Suitably the bush may sit internally or externally of wall. A part of the bush may extend beyond the end of the opening of the cavity. Alternatively, a bush may not be required and the edge of the wall presented at the opening may be suitably shaped, e.g. swaged, to form a radius at the edge of the wall to protect the line from non-axial tensile loading.

The item of fishing tackle may be a hook, and wherein the wall comprises the shank of the hook and wherein the opening is situated at one end of the wall and a bend extends from the other end of the shank. Furthermore, one of the shank and the bend may include a spigot and the other may include a spigot receiving portion, and wherein the bend is secured to the shank by inserting the spigot into the spigot receiving portion. The spigot and spigot receiving portion may include correspondingly shaped elements configured to restrict relative movement between said spigot and spigot receiving portion. For example, the spigot and spigot receiving portion may be hexagonal in cross section to engage correspondingly together. Preferably, the spigot and spigot receiving portion are circular in cross section.

Alternatively, where the compressible connector has two open ends, one end is adapted to engage over the shank of a hook, or similar elongate portion of an item of fishing tackle, and attach securely to the hook and form a shank portion thereof. The end of fishing line may then be inserted into the other open end of the connector and the connector compressed to secure the line the hook. A suitable means of attaching the connector to the hook is by mechanically pressing the connector onto the shank having an interference fit therebetween. A conventional hook may be modified by removing the eye to form a shank having a free end on which the compressible connector may attach. Suitably a mild steel connector is more malleable than a hardened steel hook to allow the connector to be pressed securely over the shank of a hardened steel hook, for example.

Alternatively, the said item of fishing tackle may be a swivel and comprise at least one compressible connector and at least one element rotatable with respect to the connector. The swivel may comprise two compressible connectors attached together by at least one element permitting relative rotation between two said compressible connectors. The at least one element permitting relative rotation between two said compressible connectors may be a swivel body.

Alternatively, the said item of fishing tackle may be a line connector and comprise a compressible connector having two open ends, line being insertable into each open end. The line connector may further comprise a first cavity extending from one end of the connector and a second cavity extending from the other end of the connector. The first and second cavities allow for end portions of different line to be separately secured and spaced apart to the connector without interfering each other. The cavities are coaxial so lines secured therein are axially aligned for maximum performance when subjected to a load in use. The lines are suitably separated and do not overlap or engage each other to ensure said alignment is consistently achieved and to prevent adverse frictional affects therebetween. Suitably the first cavity may be of a first internal diameter and the second cavity may be of a second internal diameter. This allows two lines of different sizes to be connected together in an aligned manner.

Alternatively, the said item of fishing tackle may be a connector, the item of fishing tackle further comprising an attachment element for the attachment of another item of fishing tackle thereto. Suitably the said attachment element may be situated to one end of the connector. The attachment element may for example be one of an eye, a clip, a wire, a loop, a ring and a snap shackle.

According to a further aspect of the invention there is provided a combination of such a connector and another item of fishing tackle, such as a hook.

According to a further aspect of the invention there is provided a tool comprising the features of claim 9.

The tool is adapted to compress the wall of the compressible connector of an item of fishing tackle as described above onto a portion of fishing line. Advantageously, the tool allows for quick, simple and consistent attachment of a portion of fishing line to an item of fishing tackle in accordance with the present invention. The tool comprises a pair of jaws and is configured such that when the jaws are in a closed configuration there exists a gap between opposing faces of the jaws. The gap between the jaws when in a closed configuration after the connector has been compressed on to the line inserted therein is important to the performance of the line/connector. Over compressing the connector may compromise the integrity of the line and under compressing may result in slippage of the line in the connector. The gap size may be selected depending on the diameter and/or type of line being attached to the item of fishing tackle.

For example, the tool may comprise means to selectively adjust the gap size and/or a pair of jaws may be selected from an array of jaws depending on the gap size required when the jaws are in a closed configuration.

The tool is configured to compress a connector a predetermined distance towards the portion of fishing line to secure the same thereon with a high level of accuracy and control. The connector is desirably compressed a predetermined amount to engage the fishing line and to compress the fishing line a predetermined amount without compromising its integrity. Importantly, although the cross section of the portion of fishing line secured in the connector may change during compression, its cross sectional area remains unchanged. This ensures the tensile strength of the line is not compromised and remains constant whereas the frictional force between the line and the connector wall increases with increased compression of the connector and line.

Preferably each jaw comprises a plurality of different sized corresponding grooves which are sized according to the diameter of line and/or item of fishing tackle.

Suitably at least one of the jaws may comprise gripping means to grip an item of fishing tackle placed in said jaw before and during the compression operation. The gripping means may define a gripping portion of the jaws which is made from a different material thereto having a high coefficient of friction relative to the material of the jaws. The gripping portion may be a rubber or plastics material.

Preferably the tool further comprises means to ensure the correct clamping force is applied during every clamping operation. This advantageously provides consistency for every clamping operation. Such means may be audible or visual. An example of an audible means may be a ratchet mechanism. Suitably, the clamping force applied to the compressible connector of an item of fishing tackle according to the present invention may be selectively controlled. This may be alternative to or in addition to selectively adjusting the gap between the jaws when in the closed position.

The tool may comprise means to feed an end of a line into the cavity of the compressible connector of an item of fishing tackle. This would allow for line to be inserted and secured to the connector of the item of fishing tackle in accordance with the present invention is an easy and quick manner even in cold adverse weather conditions and/or where the angler is wearing gloves which would otherwise make such an operation particularly difficult. An item of fishing tackle, such as a hook, may be manually loaded into the tool and the end of fishing line offered up to the tool. In a first operation, the end of the line may be gripped by the tool and fed into the compressible connector of the hook by operation of the tool. In a second operation, the compressible connector is compressed by the tool to secure the hook on the line.

The tool may further comprise means to automatically load an item of fishing tackle in accordance with the present invention into the jaws for attaching to a line. Such means may comprise a magazine for containing a plurality of items of fishing tackle for loading into the tool and attaching to a line in quick succession. Items of fishing tackle, such as a plurality of similar hooks in accordance with the present invention, may be adhered together for placement in the magazine, the adhesion between adjacent hooks being suitably compromised when a hook is automatically loaded into the tool.

An array of detachable and differently sized jaws may be provided and a pair of jaws may be selected from the array according to the diameter of line being connected to the item of fishing tackle being clamped and/or the length of compression area required. A pair of jaws may be selected in accordance with the desired gap size when the jaws are in a closed configuration. Desirably, each pair of differently sized jaws may be colour-coded and/or labelled according to a line size/type for the angler's convenience. The colour coding may correspond to the colour coding on a reel of line such as monofilament and/or an item of fishing tackle. Alternatively or additionally, a line gauge may be provided to enable the fisherman to select the correct groove or jaw size according to the line.

One or both of the jaws may include a lanyard hole. The tool may further comprise means for cutting a line.

Of course, the compression tool is not limited to a handheld tool and may be a piece of apparatus mounted to the ground or deck of a fishing vessel, for example. Such apparatus may be electrically or pneumatically operated and may be fully automated to provide an apparatus which is efficient, significantly increases productivity output and consistency, requires minimal operator training and reduces waste.

According to another aspect of the invention there is provided a method of attaching an item of fishing tackle in accordance with the present invention to a portion of line, comprising the steps of:
i) inserting a portion of fishing line into the cavity of the item of fishing tackle; and
ii) compressing the compressible wall thereof such that the item of fishing tackle is secured to the line.

The method may comprise the further step of attaching another item of fishing tackle to the attachment element of a connector in accordance with the present invention.

According to a further aspect of the invention there is provided a method of attaching an item of fishing tackle according to the present invention to a fishing line using a tool as described above, comprising the steps of:
i) inserting at least one item of fishing tackle between the jaws of the tool;
ii) moving said jaws towards a closed position to hold the item of fishing tackle therebetween;
iii) inserting a fishing line into the cavity of the compressible connector;
iv) further moving said jaws towards the closed position to compress the compressible wall of the connector such that the item of fishing tackle is secured to the line; and
v) releasing the item of fishing tackle and line from the tool.

Preferably the at least one item of fishing tackle is placed in one of the jaws and the other jaw is moved towards the item of fishing tackle.

Preferably in the above methods the connector is compressed a predetermined distance towards the portion of fishing line. Further preferably the connector is compressed a predetermined amount to engage the fishing line and to compress the fishing line a predetermined amount without compromising its integrity. Importantly, although the cross section of the portion of fishing line secured in the connector may change during compression, its cross sectional area remains unchanged. This ensures the tensile strength of the line is not compromised and remains constant whereas the frictional force between the line and the connector wall increases with increased compression of the connector and line.

Suitably one or both of the above methods may comprise the step of providing an adhesive to adhere the line in the cavity. A suitable adhesive may be cyanoacrylate glue or a two-part epoxy resin. However, the main advantage of the present invention is the knotless method of joining an item of fishing tackle to fishing line without the aid of adhesive and which has been shown to be stronger than a knot and as strong as the line itself, as described below.

According to a further aspect of the invention there is provided a kit of parts comprising an item of fishing tackle and a tool in accordance with the present invention.

Preferred embodiments of the present invention will now be described, by way of example only, with reference to the accompanying drawings, of which:
- Figure 1 shows a non-compressed empty tube;
- Figure 2 shows a non-compressed tube with line inserted therein;
- Figure 3 shows a compressed tube with line in;
- Figure 4 shows a compressed tube with line inserted therein, the line having a stopper knot;
- Figure 5 shows a compressed tube with line inserted therein, the line having a stopper;
- Figure 6 shows a compressed tube with line inserted therein, the line having a stopper;
- Figures 7a to 7e illustrate different possible ways of compressing the tube;
- Figure 8 illustrates a tube in cross-section;
- Figure 9a illustrates a tube having an internal bush;
- Figure 9b illustrates a tube having an external bush;
- Figures 10a to 10g illustrate a procedure for testing the strength of a fishing tackle comprising line and a device according to the invention;
- Figure 11 is a schematic representation of a swivel of the prior art;
- Figure 12 is a schematic representation of one embodiment of a swivel according to the invention;
- Figure 13 is a schematic representation of second embodiment of a swivel according to the invention;
- Figure 14 is a schematic representation of a third embodiment of a swivel according to the invention;
- Figure 14b is a schematic representation of a fourth embodiment of a swivel according to the invention;
- Figure 14c is a schematic representation of a fifth embodiment of a swivel according to the invention;
- Figure 15 is a schematic representation of sixth embodiment of a swivel according to the invention;
- Figure 16 is a schematic representation of one embodiment of a connector according to the invention;
- Figure 17 is a schematic representation of a second embodiment of a connector according to the invention;
- Figure 17b is a schematic representation of a third embodiment of a connector according to the invention;
- Figure 18 is a schematic representation of a line connector according to the invention configured to connect together line of the same diameter;
- Figure 19 is a schematic representation of a line connector according to the invention configured to connect together line of different diameters;
- Figure 20 illustrates the line connector of Figure 19 in cross-section;
- Figure 20b is a schematic representation of a line connector according to the invention including a swivel body;
- Figure 21 is a schematic representation of a tool for compressing a deformable portion of an item of fishing tackle according to the invention;

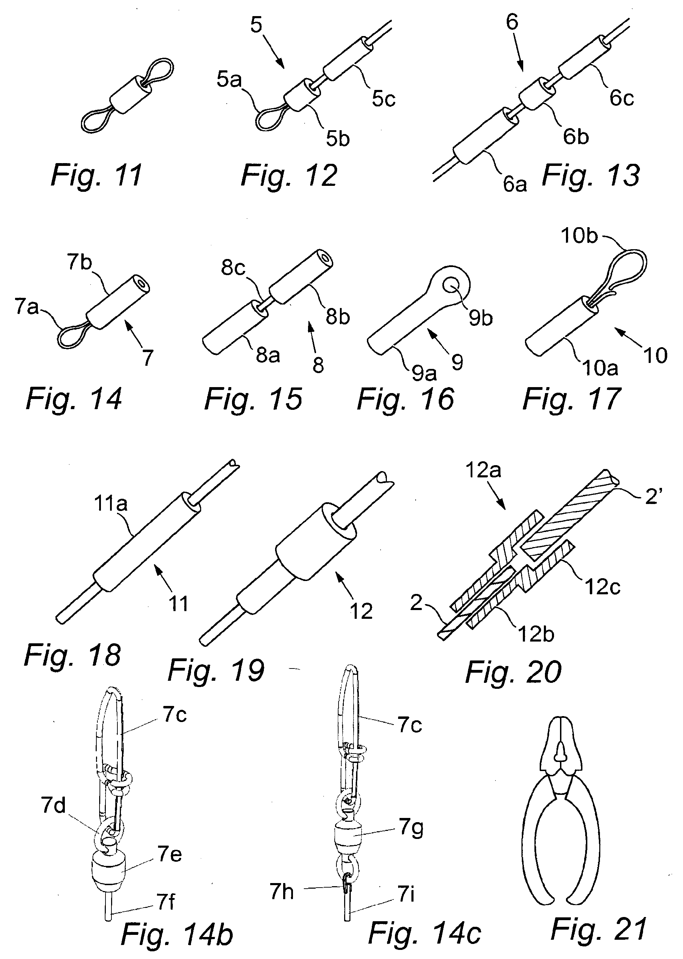

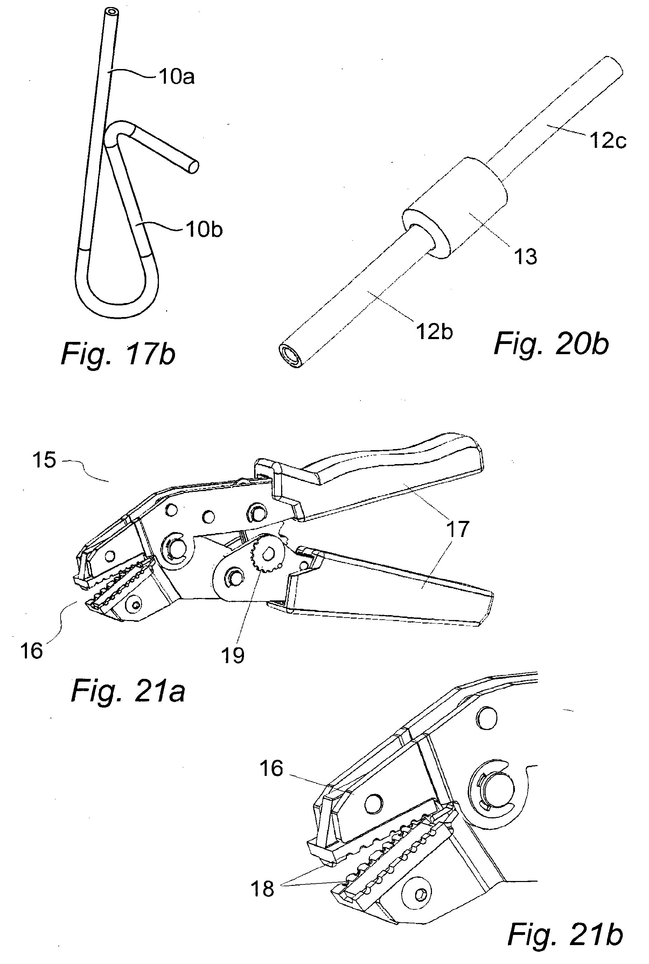

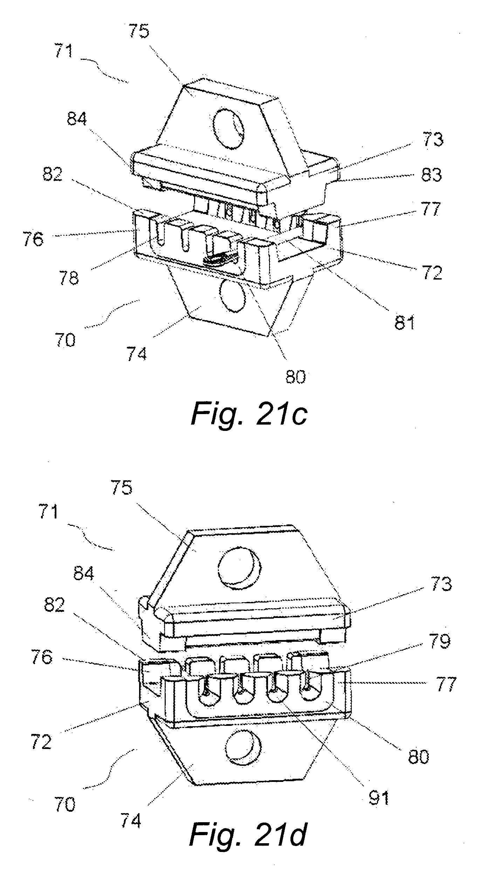

- Figures 21 a and 21 b are schematic representations of a preferred embodiment of the tool of Figure 21;
- Figures 21c and 21d are schematic representations of a preferred embodiment of the jaws of the tool of Figure 21;

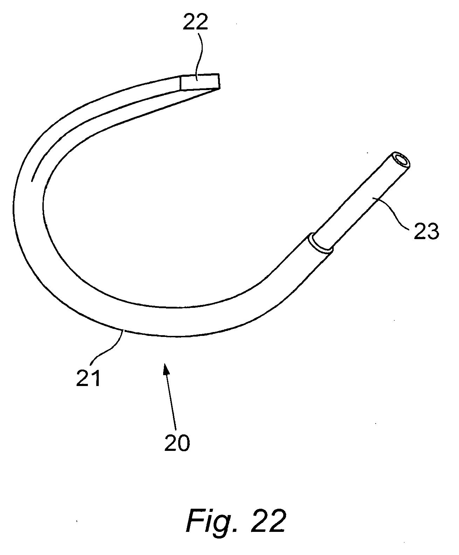

- Figure 22 is a schematic representation of the bend part of a hook according to the invention;

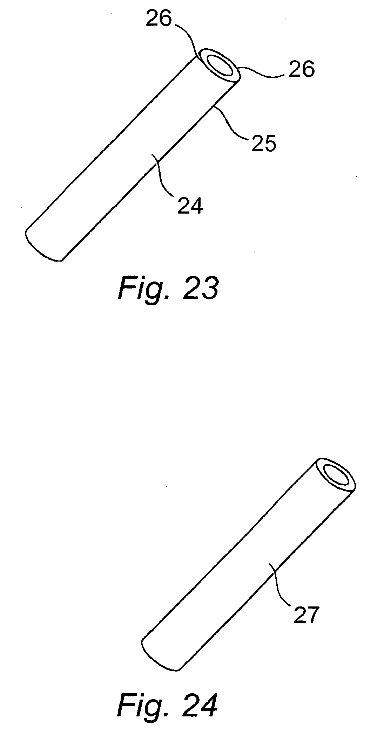

- Figure 23 is a schematic representation of the shank part of a hook according to the invention;
- Figure 24 is a schematic representation of a spacer of a hook according to the invention;

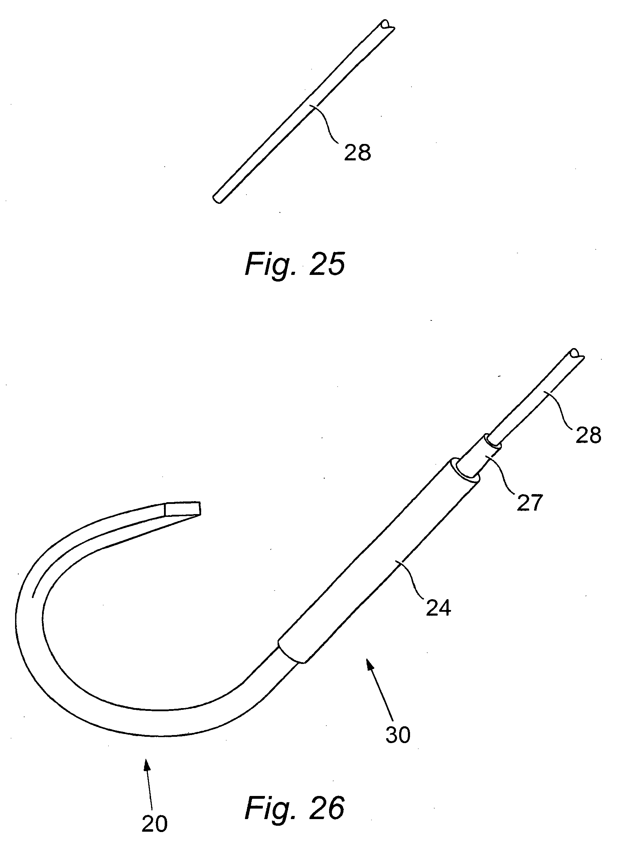

- Figure 25 is a schematic representation of a piece of line for insertion into a hook according to the invention;
- Figure 26 is a schematic representation of an assembled hook according to the invention attached to a piece of fishing line;

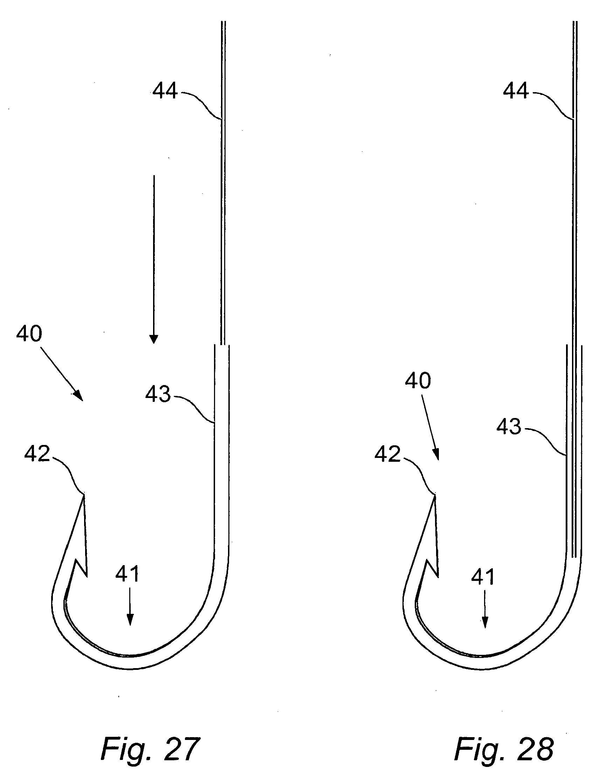

- Figure 27 is a schematic cross-sectional elevation of a hook according to a second embodiment of the invention;
- Figure 28 is a schematic cross-sectional elevation of the hook illustrated in Figure 27 with the line inserted therein;

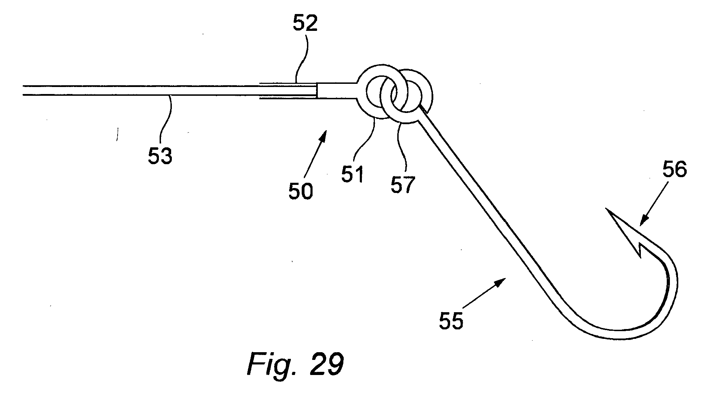

- Figure 29 is a schematic representation of another embodiment of the invention;

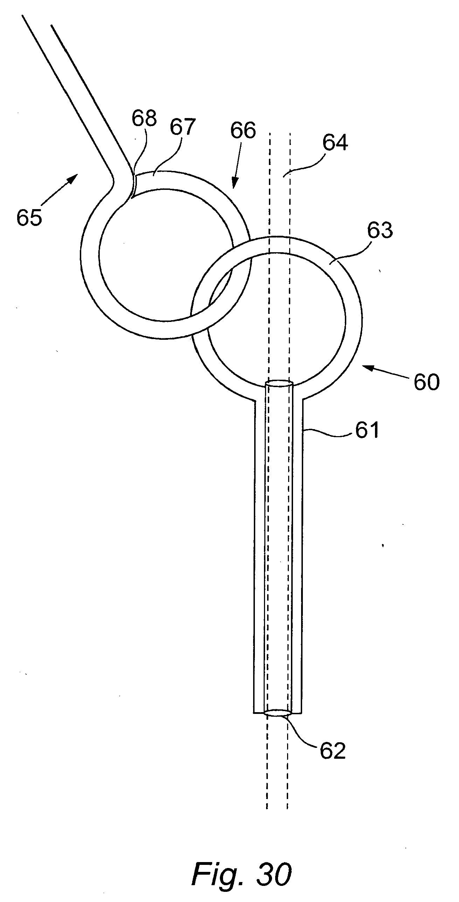

- Figure 30 is a schematic representation of an adaption of the embodiment illustrated in Figure 29; and

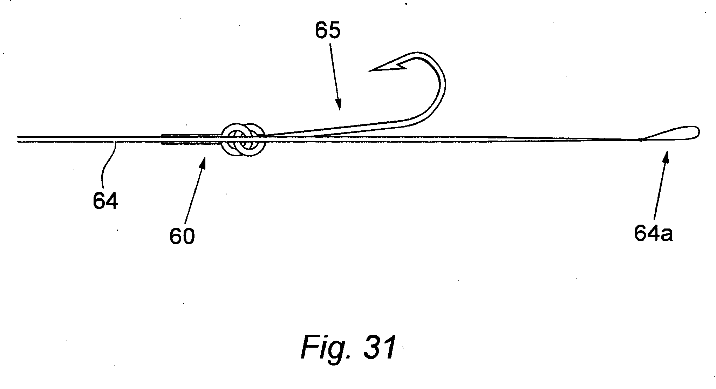

- Figure 31 is an alternative schematic representation of the embodiment illustrated in Figure 30.

Referring first to Figures 22 to 26, there is shown a fishing hook according to the invention. The hook 30 comprises a number of parts: a bend 20 as illustrated in Figure 22, a tubular shank 24 as illustrated in Figure 23, and a bush 27 insertable into the tubular shank 24. An end of line 28 is inserted into the bush 27 and secured on the line by compressing the tubular shank 24.

The tubular shank 24 is stainless steel and the bush 27 is formed of plastics material. However, it has been found that the bush 27 may be a metal material such as aluminium for certain types of line, such as braid, because such a material possesses a higher coefficient of friction than steel and desirably provides an increased level of grip on specialist types of fishing line, such as braid.

The bush 27 is also used in this embodiment to protect the line 28 when a force is exerted on the line when the axis of the line 28 and the axis of the shank 24 of the hook are not aligned. When playing a fish it is not unusual for the axis of the line, other than the portion of line inserted in the shank, to lie perpendicular to the axis of the shank of the hook. It is therefore important that in such a scenario the line does not lie against a sharp edge, which would exert a significant point load on the line and could compromise its integrity.

Referring specifically to Figure 22, the bend 20 includes a point 22 at one end of a curved section of material, typically metal, and at the other end a spigot 23, which in the example is substantially circular in cross section but which may be any suitable shape. The spigot 23 engages with the correspondingly shaped tubular shank 24 to form an interference fit therebetween. Any suitable joining technique may be used, such as welding or butt joining, to attach the spigot to the tubular shank. The tubular shank 24 is formed of a compressible inelastic material, such as tempered stainless steel, which is softer and more malleable than the hook which is typically hardened steel. Alternatively, the eye of an existing hook may be removed and a tubular shank may be pressed by interference fit, and/or other suitable joining technique, over the existing shank portion to provide a hook in accordance with the present invention.

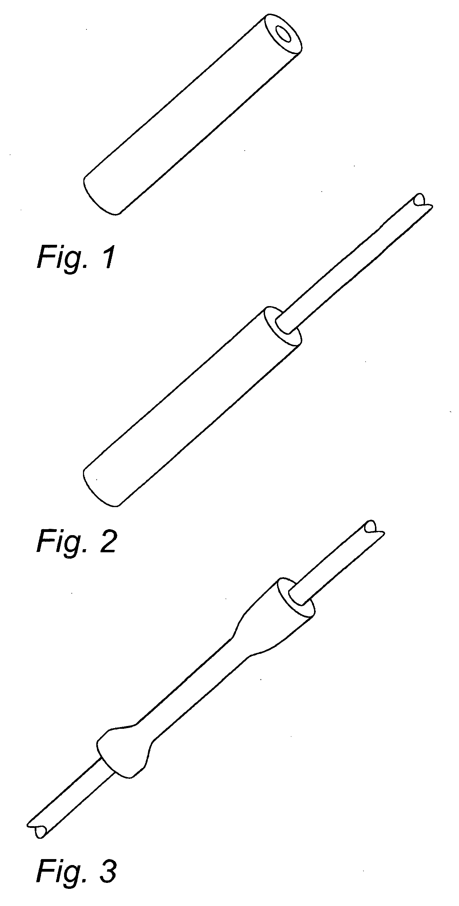

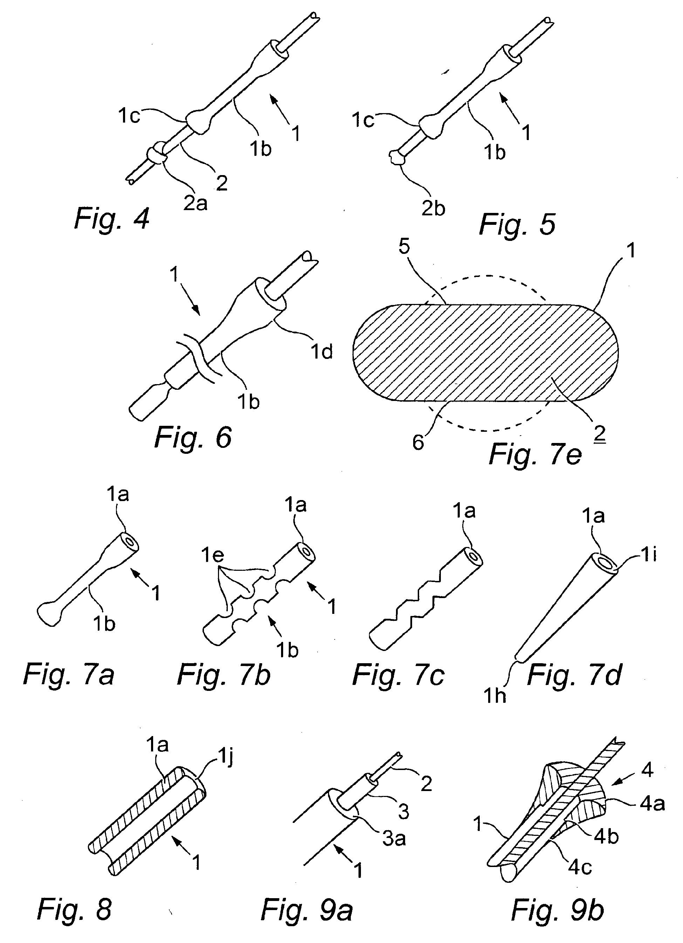

Referring now to Figures 1 to 3, there is illustrated a tube suitable for forming the deformable part of an item of fishing tackle. In Figure 3, the tube is illustrated in a deformed condition, the thinner, deformed portion of the tube attaching the same to the line by compressing the wall of the tube against the outer surface of the line without compromising the line integrity. The deformed portion may take any form but preferably the deformed portion is circular in cross section or comprises at least two flat sides, as shown in Figure 7e, to compress the line without compromising its integrity.

In Figure 4, the line 2 includes a stopper created by tying a stopper knot 2a. The purpose of adding a stopper is to provide a back stop in the event that the force of the wall 1 b of the tube 1 pressing on the line is overcome by the force exerted on the line, in which case the line would be pulled through the tube 1, until the end 1c of the tube is engaged by the stopper knot 2a.

In Figure 5, the stopper 2b is formed by melting the line 2. The stopper 2b functions in the same manner as stopper 2a.

In Figure 6, a stopper is formed in a different manner to that illustrated in Figures 4 and 5. In Figure 6, the compressible portion 1b of the tube 1 is compressed to such an extent that the line 2 is compressed, and therefore the portion of line 2 in the uncompressed portion 1 d is of a larger diameter than the section of line compressed by the compressed portion 1 b of the tube 1. Such an arrangement provides the advantage that there is no requirement to tie a knot or melt the end of the line. However, over compressing the line may adversely affect the mechanical properties thereof and under compressing the tube may allow the line to slip therein.

Figures 7a to 7e illustrate different ways in which the portion 1b may be compressed.

In Figure 7a the portion 1 b is compressed in an even fashion over the portion 1 b. The portion 1 b squeezes the line 2 along the length of the portion 1 b.

In Figure 7b the compressed portion 1 b is compressed at three different points 1 e, the line 2 being gripped at the points 1 e.

In Figure 7c the compressed portion 1 b is compressed at five different points, three points 1f on one side of the tube and two points 1g on the other, the points 1g being situated between the points 1f. This causes the line within the compressed portion 1 b of the tube 1 to follow a zig-zag path and increases the friction between the line 2 and tube 1.

In Figure 7d, the tube 1 is compressed by exerting forces on the wall of the tube at either end of the tube and perpendicular to one another. The end 1 h of the tube 1 may be compressed more than the end 1 i.

In Figure 7e, the tube 1 is compressed from an uncompressed state (shown in dashed line) to a compressed state by exerting forces on two opposite sides of the tube wall to form two flats 5,6 to the tube and compress the line 2 therein a predetermined distance to change its cross sectional shape whilst ensuring its cross sectional area and therefore tensile performance remains unchanged.

Figures 8 and 9 illustrate means to protect the line against damage resulting from the exertion of side forces on the line 2. In Figure 8, the end 1j of the wall 1 a of tube 1 is radiused. This may be achieved by swaging. The purpose of providing a radius on the end 1j is to avoid point loading of the line 2 which may compromise its integrity in the event that a force is exerted on the line 2 that is not aligned with the longitudinal axis of the tube.

In Figure 9a, an internal bush 3 is inserted in the tube 1. The bush 3 is made from a plastics material. When the line 2 is subjected to a force that is not aligned with the longitudinal axis of the tube 1, the bush bends about the point 3a and therefore distributes the point load that would otherwise be exerted on the line 2 over a greater area.

In Figure 9b, rather than providing a bush internally of the tube 1, the bush 4 is mounted externally of the tube 1. The bush 4 provides an enlarged end section 4a which the line engages with when a side force is exerted thereon, the end section 4a functioning to distribute the load on the line over a greater area and therefore reduce the risk of damage to the line.

The bush 4 includes a step 4b which sits up against the end of the tube 1, and portion 4c which surrounds the tube.

Figures 11 to 20 illustrate items of fishing tackle. Figure 11 is an example of a swivel of the prior art. Figures 12 to 20 illustrate items of fishing tackle in accordance with the present invention.

Figure 12 illustrates a swivel 5 comprising a loop 5a connected to one end of a swivel body 5b and a compressible connector 5c connected to the other end of the swivel body.

Figure 13 illustrates a swivel 6 comprising compressible connectors 6a and 6c connected to a swivel body 6b.

Figure 14 illustrates a swivel 7 comprising a compressible connector 7b and a loop 7a mounted to rotate with respect thereto. Of course, the loop 7a may take the form of a wire, a loop, a ring, a clip, a snap shackle or a so-called 'quicklink' in a similar form to that shown in Figure 17b, for example. The clip or loop 7a may comprise locking means to allow the swivel to be securely and removeably attached to one or more other items of fishing tackle. Alternatively, as shown in Figure 14b, a clip 7c may be adapted to attach to the loop 7d of the swivel 7e wherein the swivel includes a compressible connector 7f for receiving a fishing line in accordance with the present invention. In a further embodiment, as shown in Figure 14c, a known swivel 7g (as shown in Figure 11), may be attached at one end to a clip 7c and at its other end to a loop or clip 7h of a connector having a compressible connector 7i (similar to the connector shown in Figures 16 or 17).

Figure 15 illustrates a swivel 8 comprising compressible connectors 8a, 8b which are rotatable relative to each other about shaft 8c.

Figure 16 illustrates a connector 9 comprising a compressible connector 9a having an eye 9b at one end thereof.

Figure 17 illustrates a connector 10 comprising a compressible connector 10 having a clip 10b extending from one end thereof. An angler may use such a clip to attach a swivel to for example. Of course, the clip 10b may take the form of a wire, loop, ring, snap shackle or a so-called 'quick link', as shown in Figure 17b, which may be attached securely to the end of the mainline allowing for quick changes of rigs.

Figures 18 to 20 illustrate line connectors for connecting together two separate pieces of line in a coaxial and spaced manner.

The line connector 11 of Figure 18 comprises a compressible connector 11a into which line 2, 2' may be inserted from opposite ends. The compressible connector is compressed onto the line 2, 2', thereby connecting the two pieces of line together in a coaxially aligned and spaced manner.

Figures 19 and 20 illustrate a line connector 12 configured to connect together two pieces of line of different diameter. The connector 12 comprises a compressible connector 12a including two line receiving portions 12b, 12c, each configured to receive line of a different diameter. Line 2 is inserted into the portion 12b, and the portion 12b is compressed thereby securing the connector 12 onto the line 2. Line 2' is inserted into the portion 12c and compressed, thereby securing line 2' to the connector 12, and joining the two pieces of line together. In a further embodiment, the portions 12b, 12c may be rotatably coupled by a swivel 13, as shown in Figure 20b. The portions 12b, 12c may be adapted to each receive the same size line or different sized line in a similar manner to the connectors shown in Figures 18 and 19.

Figure 21 illustrates a compression tool 15 suitable for use in compressing the compressible connector. The tool 15 desirably offers the user a mechanical advantage to compress the relatively strong compressible connector towards the line to be secured thereto. The tool 15 includes a pair of jaws 16 which are adapted to compress the compressible connector of the invention in a desired and controlled manner. For example, the jaws may be configured to compress the compressible connector in any one of the manners illustrated in Figures 7a to 7e. The tool 15 is adapted to compress the compressible connector of at least one item of fishing tackle, such as a hook, connector or swivel, in accordance with the present invention, in a single clamping operation. For example, a single hook may be clamped to a line in a single operation or two or more similar or different items of fishing tackle may be clamped to separate lines in a single clamping operation.

A preferred embodiment of the tool 15 is shown in Figures 21 a and 21 b. Each of the pair of jaws 16 has a plurality of different sized corresponding grooves 18 which are sized according to the diameter of line and/or the item of fishing tackle. The grooves 18 are laterally orientated relative to a longitudinal axis of each jaw. Each groove 18 is colour-coded for the angler's convenience.

Advantageously, when the jaws 16 of the tool are closed a gap of predetermined size exists between the jaws. This prevents the tool from over compressing the compressible connector and compromising the integrity of the line. This gap size is selected depending on the diameter and/or type of line being attached to the item of fishing tackle. The gap size required has been found to be directly proportional to the tube and line diameter being compressed. The jaws 16 are detachable and differently sized jaws may be selected and fitted to the tool according to the diameter of line being connected to the item of fishing tackle being clamped. The gap size conferred with a single pair of jaws when in a closed configuration may be adjustable instead of the gap size being determined by a selected pair of differently configured jaws. Selecting a predetermined gap size when the jaws are closed is a more desirable approach as opposed to selecting a predetermined clamping force because the risk of overloading and therefore over compressing a connector and line therein is prevented when the jaws are closed irrespective of the force being exerted thereon as the jaws are prevented from moving closer together.

A preferred embodiment of the jaws of the tool is shown in Figures 21 c and 21 d. Each of the jaws 70, 71 comprise a clamping portion 72, 73 for engaging an item of fishing tackle to be compressed in accordance with the present invention, such as a loop connector, and an attachment portion 74, 75 for attaching each jaw to the tool. The clamping portion 72 of the first jaw 70 comprises two spaced and parallel walls 76, 77 extending from the clamping portion towards the second jaw 71. Each wall 76, 77 comprises a plurality of equally spaced and corresponding slots or grooves 78, 79 each adapted to receive an item offishing tackle in accordance with the present invention. As shown, one end of the item of fishing tackle engages in a groove of the first wall 76 and the other end engages in a corresponding groove of the second wall 77 so the item of fishing tackle is arranged substantially laterally across the jaws. Each groove comprises a curved base which is correspondingly sized with the compressible connector 81 of the item of fishing tackle.

The jaws are suitably made from a metal material, such as hardened steel. However, a portion 80 of the first wall 76 and/or second wall 77 is formed from a material having a relatively high coefficient of friction, such as rubber or plastic, to provide grip when an item of fishing tackle is placed in the first jaw. This ensures the item of fishing tackle does not slip from the first jaw before the item of fishing tackle.is compressed in the jaws.

The upper open edges of the grooves 78 in the first wall 76 are curved to help guide an item of fishing tackle being inserted therein. The grooves 78 comprise a curved base which is complimentarily shaped with the compressible connector 81 of the item of fishing tackle to thereby support the same when received in the first jaw. The upper open edges of the grooves 79 in the second wall are closely spaced and are substantially right angled as opposed to being curved. The outer edges of the grooves 79 in the second wall are tapered inwardly to define a funnel portion 91 around the outer edge of each groove 79. Each funnel portion 91 helps to guide an end of fishing line being inserted into the compressible connector 81. This is particularly desirable for users with poor eyesight or working in difficult conditions such as when using the tool in cold weather when feeding an end of fishing line into the eye of a hook, for example, would be extremely difficult, particularly when wearing gloves.

The upper faces 82 of the first and second walls 76, 77 are substantially flat to mate with a substantially flat corresponding faces 83 of the clamping portion 73 of the second jaw 71. The projected part 84 of the clamping portion 73 of the second jaw 71 is suitably sized so that when the clamping faces 82, 83 are in a closed position and thereby engaged, a gap exists between the projected part 84 and the first jaw to prevent the tool from over compressing the compression connector 81 and compromising the integrity of the line. This gap size may be selectively adjustable depending on the diameter of line being attached to the item of fishing tackle.

Referring back to Figures 21 a and 21 b, the jaws 16 are angled relative to handle portions 17 for ease of use of the tool. The tool 15 has grips suitable for use by right- and left-handed fishermen.

The tool 15 includes a ratchet mechanism 19 to allow the gap size between the jaws when in a closed configuration to be selectively adjusted and to ensure the correct clamping force is applied during every clamping operation. Alternatively or additionally, the ratchet mechanism 19 may be adapted to adjust the clamping force applied to the connector and line.

One of the advantages of the tool 15 is that the item of fishing tackle can be held in the tool whilst the fisherman attempts to insert the line into the compressible connector. It is much easier to hold a larger object like a hand tool, than it is to hold a tiny item of fishing tackle such as a hook.

Firstly, the handle portions 1,7 are moved towards each other to move the jaws towards a closed position to hold an item of fishing tackle in accordance with the present invention therebetween. After the line is inserted into the compressible connector of an item of fishing tackle in accordance with the present invention, the handle portions 17 are further moved together by the operator to move the jaws 16 towards the closed position thereby to compress and inelastically deform the compressible connector of the item of fishing tackle and securely attach the same to the line therein without compromising the integrity of the line. The ratchet mechanism 19 ensures sufficient clamping force is applied to the line and connector during the clamping operation. On further movement of the handle portions 17 towards each other, the ratchet mechanism 19 is released and the jaws 16 open to release the item of fishing tackle now securely attached to the line.

Figures 27 and 28 illustrate another embodiment of a hook according to the invention where the hook 40 is comprised of a single element which includes a bend 41 that may be substantially solid, and a shank 43 that is hollow. The bend 41 presents a point 42 at one end with the shank 43 extending from the other end. In use the fisherman inserts the line 44 into the hollow shank 43 and when the line 44 is fully inserted, the wall of the shank 43 is compressed such that the line is gripped and the hook is secured to the line.

Referring now to Figure 29 there is illustrated a connector 50 having an eye 51 and a compressible tube 52 adapted to receive a fishing line 53. As can be seen the connector 50 is attached to a fishing hook 55 comprising a point 56 and an eye 57. The eyes 51 of the connector 50 and 57 of the hook 55 interlock, and in the illustrated embodiment these two components are assembled during in manufacture. However, one of the respective eyes 51, 57 may be formed in the manner illustrated in the embodiment illustrated in Figure 30, with one or both of the eyes 51, 57 formed by bending the wire from which the component is formed to leave a gap 68 such that the eye of the other component may be inserted through the gap 68 such that the eyes interlock. The gap 68 may then be closed by squeezing the eye with a suitable tool. The hook 55 and connector 50 may be sold pre-assembled or may be sold separately.

Referring now to Figures 30 and 31, the connector 65 includes a compressible tube 61, the bore 62 of which extends through the wall of eye 63. The eye 63 may be attached to the tube 61 by suitable means, such as laser welding, for example. The advantage of this arrangement is that the line 64 may be passed through the bore 62 and extend beyond the hook 65, (see part 64a of the line 64 in Figure 31), and the amount of line extending beyond the hook 65 adjusted to the requirement of the angler. Therefore, the connector may be attached to the end of the line or a distance from the end if desired. This also desirably allows multiple connectors to be attached to a single piece of line making them ideal for rig manufacture and multi link terminal tackle set ups, which is particularly desirable to lure anglers as the small solid eye is suitable for attaching lures that feature split rings. The tube 61 also allows for the line to be passed across the back of the hook shank so that a 'hair' can be made. Furthermore, more than one hook may connect to a single connector. The eye 63 of the connector may be slender in shape rather than being substantially circular as shown in the Figures. A slender shape would desirably reduce the risk of collecting weed and/or debris which would otherwise require the line to be wound in for the weed and/or debris to be removed resulting in an undesirable interruption to fishing time. Of course, the eye 63 may take the form of a wire, a loop, a ring, a clip, a snap shackle or so-called 'quicklink', for example.

Hooks typically go through a number of tempering processes which can make the material from which they are made unsuitable for compressing onto the line. By making the connector a separate but linked component the material properties of the connector may be selected to be the most appropriate for compression on to a line. Also, since different types of line, be that different strengths of line or line from different manufacturers, have different diameters. By fabricating the connector as a separate component different diameter bores can be provided without having to change the manufacture of the hook. Also, because the physical requirements of the hook do not need to be addressed in the specification of the connector, it may be possible to manufacture the connector from cheaper materials and in a less costly manner.

As can be appreciated from Figure 30, the eye of one of the hook and connector (the hook in the case of the embodiment of Figure 30), is formed by bending a piece of wire. The eye 66 is formed so as to leave an end 67 that is spaced slightly from the adjacent part of the hook, leaving a gap 68. The hook 66 may therefore be manufactured and sold as a separate item to the connector 60. To attach the hook to the connector, the angler passes the eye of the connector 60 through the gap 68 and then closes the gap by squeezing the wire from which the eye 66 is formed with a suitable tool. In this way the angler can use the connector 60 with a wide range of hooks. Of course, it could be the eye of the connector that includes the gap, in which case the hook may or may not be constructed in the manner illustrated in Figure 30.

Of course, the connector 60 can be used with other items of fishing tackle having an eye other than a hook, such as a known swivel as shown in Figure 11 or a swivel in accordance with the present invention as shown in Figures 12 and 14 for example. Furthermore, the connector 60 may connect with another connector such as shown in Figure 16 and 17, for example. The connectors 16, 17, 60 may be sized accordingly to accommodate a certain diameter and/or length of line in the compression compressible connector 9a, 10a, 61. Connectors of the same or different size may be connected together as described above.

### Examples

One of the objects of the invention is to provide a means of attaching an item of fishing tackle to a line which gives a stronger connection than a knot.

In order to establish this, a number of mechanical tests were conducted:

### Test 1 - Tensile Test to Compare Compressed Line against Knot

A length of cold drawn stainless steel tube with the following dimensions: 1.59mm outside diameter, 1.19mm inside diameter, 0.2mm wall and 15mm length was prepared in the following way:
i) Heating until cherry red for approximately 10 seconds and then cooling rapidly in water. This was repeated three times;
ii) A piece of nylon fishing line diameter 0.26mm distributed as Preston Reflo Powerline™ was passed through the tube;
iii) The tube was then compressed on to the nylon line using a pair of pliers and reasonable force to compress and trap the line. The tube was not compressed along the entire length but a minor section of the tube was left uncompressed in order to prevent the end of the tube cutting into the line;
iv) The emerging length of line was then tied to a fishing hook approximately 200mm from the tube using a half blood tucked knot with five rotations of line;
v) The tube was then placed in a vice which was tightened enough to hold the tube but not deform it further; and
vi) The hook was then gripped using a pair of pliers and the line was loaded slowly by hand in-line with the tube until failure of the line occurred.

It was noted that the line failed at the point of the knot whilst it remained intact at the end of the tube.

Test 1 demonstrates that securing fishing line in a tube using compression is stronger than the commonly used method of tying a half blood tucked knot with five rotations of line.

To reinforce these results, five tensile tests were performed on each of a nylon line having an actual diameter of 0.205mm attached to a compression tube as described above and the same type of line knotted to a hook. Table 1 below shows the results of the tensile tests indicating the breaking strain of the line in lbs. It can be seen that the breaking strain required to break the line attached to the tube in accordance with the present invention is higher and therefore stronger than the line knotted to a hook.

**Table 1:**

| Sample | Nylon line attached in compression tube | Nylon line attached to hook by spade knot |
|---|---|---|
| 1 | 6.01 | 4.59 |
| 2 | 6.16 | 5.38 |
| 3 | 5.31 | 4.87 |
| 4 | 5.9 | 5.7 |
| 5 | 6.1 | 3.78 |

### Test 2 - Tensile Test for Compressed Line

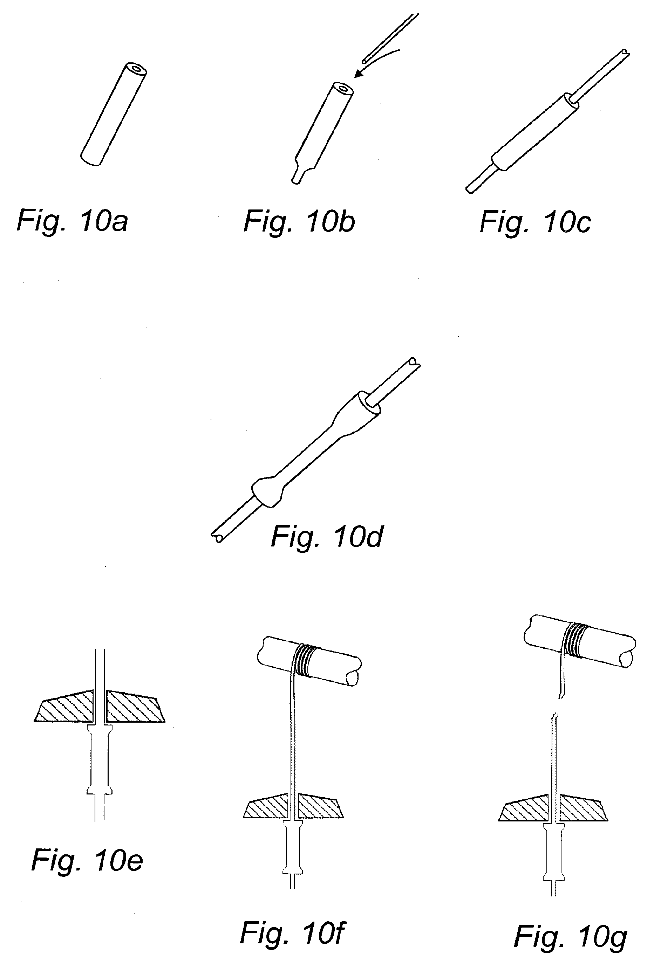

A length of gauge 19 cold drawn stainless steel tube with the following dimensions: 1.10mm outside diameter, 0.685mm inside diameter, 0.208mm wall thickness, 15mm length was prepared in the following way to grip a piece of Mitchel Universe™ 0.22mm, 3,900Kg nylon fishing line. The test is illustrated in Figures 10a to 10g.
i) Heating the tube until cherry red for approximately 10 seconds then cooling rapidly in water, repeated three times;
ii) An end of line was inserted into the tube (Figure 10b);
iii) The line was pulled through the tube (Figure 10c);
iv) The tube was compressed a predetermined distance over a major length to compress the line therein without compromising its integrity whilst leaving uncompressed tube end portions (see Figure 10d);
v) The tube was constrained below the jaws of a vice without compressing the line (see Figure 10e);
vi) The other end of the line was wrapped approximately four times around a 24mm diameter soft rubber handle of a mallet to provide friction and prevent high stress in the area (see Figure 10f); and
vii) The line was pulled slowly to failure (see Figure 10g).

The line failed in between the tube and the handle leaving a length of approximately 40mm unbroken line protruding from the tube.

This test shows that it is possible to grip 0.23mm diameter nylon fishing line in a 1.10 outside diameter and 0.685 inside diameter stainless steel tube using a knot, strong liquid adhesive and compression with a retention strength equal to 100% of the line strength. This demonstrates that if tackle is joined to a line using this method then the weakest part of the resulting equipment is the line.

Additional tests were performed with different line sizes (0.19 to 0.305 mm diameter Reflo Powerline™ and 0.47 to 0.69 mm diameter Mustad Snood Mono Clear™ and tubes and without adhesive:
1. A tube outer diameter of 1.1 mm and wall thickness of 0.208 mm was sufficiently thick to provide a frictional force almost equal to (96.29%) the tensile strength for the largest line tested (0.305 mm diameter Preston Reflo Powerline™) which failed at an average force of 14.72 lb.
   It was found that for the outer diameter of 1.1 mm tube when tested with the 0.19 to 0.305 mm diameter Reflo Powerline™ the optimal jaw gap was linearly related to the line diameter. It was also found that the tightest acceptable tolerance for the jaw gap was +/- 0.015 mm
   For the 1.1 mm outer diameter tubes when used with the 0.19 to 0.305 mm diameter Preston Reflo Powerline™ it was found that the minimum jaw/crimp length was 6 mm.
2. A tube outer diameter of 1.3 mm and wall thickness of 0.305 mm was sufficiently thick to provide a frictional force almost equal to (96.38%) the tensile strength of 0.575 mm diameter (30 lb) Mustad Snood Mono™ which failed at an average force of 42.3 lb

It was found that for the outer diameter of 1.3 mm tube when tested with the 0.47 to 0.69 mm diameter Mustad Snood Mono Clear™ the optimal jaw gap was linearly related to the line diameter. It was found that the tightest acceptable tolerance for the jaw gap was +/- 0.02 mm

When the 15 to 30 lb Mustad Snood Mono™ line was tested it was found that the jaw/crimp length needed to be increased to 10 mm to maintain performance.

The affect of water being present was tested by submerging the line before and after joining the line and tube. The line and tube were soaked for 14 hours following joining. No detrimental affect was seen to the strength of the line retention.

### Mechanical Testing Conclusions

The wall thickness of the tube is a function of the tube initial inner and outer diameters. As the tube inner diameter is driven by the line size the tube outer diameter was varied to give the optimum wall thickness. The wall thickness is determined by the following factors: -
- Stiffness required to resist distortion of the compressed area as the line is loaded in tension;
- Stiffness to resist bending of the compressed area; and
- Softness to allow compression using a suitable compression tool

The gap between the jaws at the completion of the compression cycle is a critical factor in the performance of the line/tube interface. Under ideal operational conditions, the line would be compressed to the smallest size that will not compromise tensile strength. It is believed that the line is soft enough that the cross-sectional area does not reduce during compression but instead changes shape from substantially round to flattened round. This means that the tensile strength of the line remains constant but the frictional force between the line and the tube increases the more the line is compressed. This relationship holds true until the line is compressed so much that the cross-sectional area is reduced and the tensile strength of the line is also reduced.

Annealed Stainless Steel 316 was selected as a suitable material for the application due to its high resistance to corrosion, resistance to bending, softness and good homogeniality for compression.

At the line/tube interface, the magnitude of the surface area subject to the load must be large enough that line material shear limit is not exceeded. Since the diameter of the line is predetermined, the area of line/tube interface is increased by increasing the jaw/crimp length.

Due to the nature of the environment in which the present invention will be used, is was necessary to test the affect of water being present within the tube both during and following the joining or compression process.

## Claims

1. An item of fishing tackle comprising a compressible connector adapted to attach said item of fishing tackle to a fishing line, wherein the compressible connector comprises:
a wall defining an elongate cavity, having an opening at one end thereof, the cavity being adapted to receive a portion of fishing line through the opening, and wherein the wall is adapted to be compressed inelastically towards the portion of fishing line inserted into the cavity to secure the said portion of line therein;
a force distribution element, adapted to distribute lateral forces exerted on the line by the connector in the region of the opening, and wherein the force distribution element comprises a radius on the edge of the wall presented at the opening.

2. An item of fishing tackle according to Claim 1, wherein the force distribution element comprises a sleeve of an elastically compressible material that sits internally or externally of the wall.

3. An item of fishing tackle according to any one of the preceding Claims, wherein the said item of fishing tackle is a hook, wherein the wall comprises the shank of the hook, the opening is situated at one end of the wall and a bend extends from the other end of the shank.

4. An item of fishing tackle according to any of Claims 1 to 3, wherein the said item of fishing tackle is a swivel and comprises at least one compressible connector and at least one element rotatable with respect to the connector.

5. An item of fishing tackle according to Claim 4, comprising two compressible connectors attached together by at least one element permitting relative rotation between two said compressible connectors.

6. An item of fishing tackle according to any of Claims 1 to 5, wherein the said item of fishing tackle is a line connector and comprises a compressible connector having two open ends, the line being insertable into each open end including a first cavity, extending from one end of the connector, and a second cavity, extending from the other end of the connector, and wherein the first cavity is of a first internal diameter and the second cavity is of a second internal diameter.

7. An item of fishing tackle according to any of Claims 1 to 6, wherein the said item of fishing tackle is a connector, the item of fishing tackle further comprising an attachment element for the attachment of another item of fishing tackle thereto, and wherein the said attachment element is situated to one end of the connector.

8. An item of fishing tackle according to Claim 7, wherein the attachment element is one of: an eye, a clip, a wire, a loop, a ring and a snap shackle.

9. A tool adapted to compress the wall of the compressible connector of an item of fishing tackle as claimed in any preceding claim onto a portion of fishing line, comprising:
a pair of jaws, configured such that when the jaws are in a closed configuration there exists a gap between opposing faces of the jaws, wherein each jaw further comprises a plurality of different sized corresponding grooves, which are sized according to the diameter of line and/or item of said fishing tackle, and wherein at least one of the jaws further comprises gripping means to grip an item of fishing tackle placed in said jaw before and during the compression operation, said gripping means defines a gripping portion of the jaws which is made from a different material thereto having a high coefficient of friction relative to the material of the jaws.

10. A tool according to Claim 9, comprising means to ensure the correct clamping force is applied during every clamping operation.

11. A tool according to any of Claims 9 to 10, comprising means to feed an end of a line into the cavity of the compressible connector of an item of fishing tackle according to any of claims 1 to 8.

12. A tool according to any of Claims 9 to 11, comprising means to automatically load an item of fishing tackle according to any of claims 1 to 8 into the jaws for attaching to a line.

13. A tool according to Claim 12, wherein the means for automatically loading an item of fishing tackle according to any of claims 1 to 8 into the jaws comprise a magazine for containing a plurality of items of fishing tackle.

14. A method of attaching an item of fishing tackle as claimed in any of Claims 1 to 8 to a fishing line using a tool as claimed in any of Claims 9 to 13, comprising the steps of:
i) inserting at least one item of fishing tackle between the jaws of the tool;
ii) moving said jaws towards a closed position to hold the item of fishing tackle therebetween;
iii) inserting a fishing line into the cavity of the compressible connector;
iv) further moving said jaws towards the closed position to compress the compressible wall of the connector such that the item of fishing tackle is secured to the line; and
v) releasing the item of fishing tackle and line from the tool.

15. A method according to Claim 14, wherein the at least one item of fishing tackle is placed in one of the jaws and the other jaw is moved towards the item of fishing tackle.

## Patentansprüche

1. Ein Angelzeug-Gegenstand, der ein zusammendrückbares Verbindungsglied beinhaltet, das angepasst ist, den Angelzeug-Gegenstand an einer Angelschnur anzubringen, wobei das zusammendrückbare Verbindungsglied Folgendes beinhaltet:
eine Wand, die eine längliche Aussparung definiert, die an einem Ende davon eine Öffnung aufweist, wobei die Aussparung angepasst ist, einen Teilbereich der Angelschnur durch die Öffnung aufzunehmen, und wobei die Wand angepasst ist, zu dem Teilbereich der in die Aussparung eingeführten Angelschnur hin, unelastisch zusammengedrückt zu werden, um den Teilbereich der Schnur darin zu sichern;
ein Kraftverteilungselement, das angepasst ist, Seitenkräfte, die von dem Verbindungsglied in dem Bereich der Öffnung auf die Schnur ausgeübt werden, zu verteilen, und wobei das Kraftverteilungselement einen Radius an der Kante der Wand beinhaltet, die an der Öffnung dargestellt ist.

2. Angelzeug-Gegenstand gemäß Anspruch 1, wobei das Kraftverteilungselement eine Hülse aus einem elastisch zusammendrückbaren Material, das innerhalb oder außerhalb der Wand sitzt, beinhaltet.

3. Angelzeug-Gegenstand gemäß einem der vorhergehenden Ansprüche, wobei der Angelzeug-Gegenstand ein Haken ist, wobei die Wand den Schaft des Hakens beinhaltet, die Öffnung an einem Ende der Wand befindlich ist und eine Krümmung sich von dem anderen Ende des Schafts erstreckt.

4. Angelzeug-Gegenstand gemäß einem der Ansprüche 1 bis 3, wobei der Angelzeug-Gegenstand ein Wirbel ist und mindestens ein zusammendrückbares Verbindungsglied und mindestens ein in Bezug auf das Verbindungsglied drehbares Element beinhaltet.

5. Angelzeug-Gegenstand gemäß Anspruch 4, der zwei zusammendrückbare Verbindungsglieder beinhaltet, die durch mindestens ein Element, welches die relative Drehung zwischen zweien der zusammendrückbaren Verbindungsgliedern erlaubt, aneinander angebracht sind.

6. Angelzeug-Gegenstand gemäß einem der Ansprüche 1 bis 5, wobei der Angelzeug-Gegenstand ein Schnurverbindungsglied ist und ein zusammendrückbares Verbindungsglied beinhaltet, das zwei offene Enden aufweist, wobei die Schnur in jedes offene Ende, das eine erste Aussparung umfasst, die sich von einem Ende des Verbindungsglieds erstreckt, und eine zweite Aussparung, die sich von dem anderen Ende des Verbindungsglieds erstreckt, einführbar ist, und wobei die erste Aussparung einen ersten Innendurchmesser aufweist und die zweite Aussparung einen zweiten Innendurchmesser aufweist.

7. Angelzeug-Gegenstand gemäß einem der Ansprüche 1 bis 6, wobei der Angelzeug-Gegenstand ein Verbindungsglied ist, wobei der Angelzeug-Gegenstand ferner ein Anbringungselement zur Anbringung eines weiteren Angelzeug-Gegenstands daran beinhaltet, und wobei das Anbringungselement an einem Ende des Verbindungsglieds befindlich ist.

8. Angelzeug-Gegenstand gemäß Anspruch 7, wobei das Anbringungselement eines von Folgenden ist: eine Öse, ein Clip, ein Draht, eine Schlaufe, ein Ring und ein Schnappschäkel.

9. Ein Werkzeug, das angepasst ist, die Wand des zusammendrückbaren Verbindungsglieds eines Angelzeug-Gegenstands gemäß einem der vorhergehenden Ansprüche auf einem Teilbereich der Angelschnur zusammenzudrücken, das Folgendes beinhaltet:
ein Paar Backen, die derart konfiguriert sind, dass, wenn die Backen in einer geschlossenen Konfiguration sind, ein Spalt zwischen gegenüberliegenden Flächen der Backen vorhanden ist, wobei jede Backe ferner eine Vielzahl von unterschiedlich bemessenen entsprechenden Nuten beinhaltet, die nach dem Durchmesser der Schnur und/oder dem Angelzeug-Gegenstand bemessen sind, und wobei mindestens eine der Backen ferner ein Greifmittel beinhaltet, um einen Angelzeug-Gegenstand, der in der Backe platziert wurde, vor und während des Zusammendrückvorgangs zu ergreifen, wobei das Greifmittel einen Greifteilbereich der Backen definiert, der dazu aus einem anderen Material hergestellt ist, das relativ zu dem Material der Backen einen hohen Reibungskoeffizienten aufweist.

10. Werkzeug gemäß Anspruch 9, das ein Mittel beinhaltet, um zu gewährleisten, dass während jedes Klemmvorgangs die richtige Klemmkraft angewendet wird.

11. Werkzeug gemäß einem der Ansprüche 9 bis 10, das ein Mittel beinhaltet, um ein Ende einer Schnur in die Aussparung des zusammendrückbaren Verbindungsglieds eines Angelzeug-Gegenstands gemäß einem der Ansprüche 1 bis 8 einzulegen.

12. Werkzeug gemäß einem der Ansprüche 9 bis 11, das ein Mittel beinhaltet, um einen Angelzeug-Gegenstand gemäß einem der Ansprüche 1 bis 8 automatisch in die Backen zum Anbringen an eine Schnur zu laden.

13. Werkzeug gemäß Anspruch 12, wobei das Mittel zum automatischen Laden eines Angelzeug-Gegenstands gemäß einem der Ansprüche 1 bis 8 in die Backen ein Magazin zum Fassen einer Vielzahl von Angelzeug-Gegenständen beinhaltet.

14. Ein Verfahren zum Anbringen eines Angelzeug-Gegenstands gemäß einem der Ansprüche 1 bis 8 an einer Angelschnur unter Verwendung eines Werkzeugs gemäß einem der Ansprüche 9 bis 13, das die folgenden Schritte beinhaltet:
i) Einführen mindestens eines Angelzeug-Gegenstands zwischen die Backen des Werkzeugs;
ii) Bewegen der Backen hin zu einer geschlossenen Position, um den Angelzeug-Gegenstand dazwischen zu halten;
iii) Einführen einer Angelschnur in die Aussparung des zusammendrückbaren Verbindungsglieds;
iv) ferner Bewegen der Backen hin zu der geschlossenen Position, um die zusammendrückbare Wand des Verbindungsglieds derart zusammenzudrücken, dass der Angelzeug-Gegenstand an der Schnur gesichert ist; und
v) Freigeben des Angelzeug-Gegenstands und der Schnur aus dem Werkzeug.

15. Verfahren gemäß Anspruch 14, wobei der mindestens eine Angelzeug-Gegenstand in einer der Backen platziert ist und die andere Backe hin zu dem Angelzeug-Gegenstand bewegt wird.

## Revendications

1. Un article de matériel de pêche comprenant un raccord compressible conçu pour attacher ledit article de matériel de pêche à une ligne de pêche, où le raccord compressible comprend :
une paroi définissant une cavité allongée, possédant une ouverture au niveau d'une extrémité de celle-ci, la cavité étant conçue pour recevoir une portion de ligne de pêche par l'ouverture, et où la paroi est conçue pour être comprimée de manière inélastique en direction de la portion de ligne de pêche insérée dans la cavité afin d'assujettir ladite portion de ligne dans celle-ci ;
un élément de répartition de forces, conçu pour répartir des forces latérales exercées sur la ligne par le raccord dans la région de l'ouverture, et où l'élément de répartition de forces comprend un rayon sur le bord de la paroi présenté au niveau de l'ouverture.

2. Un article de matériel de pêche selon la revendication 1, où l'élément de répartition de forces comprend un manchon en une matière compressible de manière élastique qui se trouve sur l'intérieur ou l'extérieur de la paroi.

3. Un article de matériel de pêche selon l'une quelconque des revendications précédentes, ledit article de matériel de pêche étant un crochet, où la paroi comprend la tige du crochet, l'ouverture est située au niveau d'une extrémité de la paroi et une courbure s'étend à partir de l'autre extrémité de la tige.

4. Un article de matériel de pêche selon n'importe lesquelles des revendications 1 à 3, où ledit article de matériel de pêche est un émerillon et comprend au moins un raccord compressible et au moins un élément qui peut tourner par rapport au raccord.

5. Un article de matériel de pêche selon la revendication 4, comprenant deux raccords compressibles attachés ensemble par au moins un élément permettant une rotation relative entre lesdits deux raccords compressibles.

6. Un article de matériel de pêche selon n'importe lesquelles des revendications 1 à 5, où ledit article de matériel de pêche est un raccord de ligne et comprend un raccord compressible ayant deux extrémités ouvertes, la ligne pouvant être insérée dans chaque extrémité ouverte y compris une première cavité, qui s'étend à partir d'une extrémité du raccord, et une deuxième cavité, qui s'étend à partir de l'autre extrémité du raccord, et où la première cavité est d'un premier diamètre interne et la deuxième cavité est d'un deuxième diamètre interne.

7. Un article de matériel de pêche selon n'importe lesquelles des revendications 1 à 6, où ledit article de matériel de pêche est un raccord, l'article de matériel de pêche comprenant en outre un élément d'attache destiné à y attacher un autre article de matériel de pêche, et où ledit élément d'attache est situé sur une extrémité du raccord.

8. Un article de matériel de pêche selon la revendication 7, où l'élément d'attache est un élément parmi : un oeillet, un collier de fixation, un fil, une boucle, un anneau et un mousqueton à ressort.

9. Un outil conçu pour comprimer la paroi du raccord compressible d'un article de matériel de pêche tel que revendiqué dans n'importe quelle revendication précédente sur une portion de ligne de pêche, comprenant :
une paire de mâchoires, configurées de telle sorte que lorsque les mâchoires sont dans une configuration fermée, il existe un écartement entre des faces opposées des mâchoires, où chaque mâchoire comprend en outre une pluralité de rainures correspondantes de différentes dimensions, lesquelles sont dimensionnées selon le diamètre de la ligne et/ou l'article dudit matériel de pêche, et où au moins l'une des mâchoires comprend en outre un moyen d'agrippement pour agripper un article de matériel de pêche placé dans ladite mâchoire avant et pendant l'opération de compression, ledit moyen d'agrippement définit une portion d'agrippement des mâchoires qui est réalisée à partir d'un matériau différent par rapport à celles-ci ayant un coefficient de frottement élevé relativement au matériau des mâchoires.

10. Un outil selon la revendication 9, comprenant un moyen pour garantir que la force de serrage correcte est appliquée pendant chaque opération de serrage.

11. Un outil selon n'importe lesquelles des revendications 9 à 10, comprenant un moyen pour introduire une extrémité d'une ligne dans la cavité du raccord compressible d'un article de matériel de pêche selon n'importe lesquelles des revendications 1 à 8.

12. Un outil selon n'importe lesquelles des revendications 9 à 11, comprenant des moyens pour charger automatiquement un article de matériel de pêche selon n'importe lesquelles des revendications 1 à 8 dans les mâchoires pour l'attacher à une ligne.

13. Un outil selon la revendication 12, où les moyens pour charger automatiquement un article de matériel de pêche selon n'importe lesquelles des revendications 1 à 8 dans les mâchoires comprennent un magasin destiné à contenir une pluralité d'articles de matériel de pêche.

14. Une méthode pour attacher un article de matériel de pêche tel que revendiqué dans n'importe lesquelles des revendications 1 à 8 à une ligne de pêche à l'aide d'un outil tel que revendiqué dans n'importe lesquelles des revendications 9 à 13, comprenant les étapes consistant à :
i) insérer au moins un article de matériel de pêche entre les mâchoires de l'outil ;
ii) déplacer lesdites mâchoires en direction d'une position fermée afin de tenir l'article de matériel de pêche entre celles-ci ;
iii) insérer une ligne de pêche dans la cavité du raccord compressible ;
iv) déplacer davantage lesdites mâchoires en direction de la position fermée afin de comprimer la paroi compressible du raccord de telle sorte que l'article de matériel de pêche soit assujetti à la ligne ; et
v) libérer l'article de matériel de pêche et la ligne de l'outil.

15. Une méthode selon la revendication 14, où l'au moins un article de matériel de pêche est placé dans l'une des mâchoires et l'autre mâchoire est déplacée en direction de l'article de matériel de pêche.
